# EUROPÄISCHE PATENTANMELDUNG

(11) **EP 2 216 558 A2**
(43) Veröffentlichungstag der Anmeldung: **11.08.2010**
(21) Anmeldenummer: 09177984.3
(22) Anmeldetag: 04.12.2009
(51) Int. Cl.: F16C 13/00, D21G 1/02

(54) **Biegeeinstellwalze**

(30) Priorität: 10.02.2009 DE 102009000738
(71) Anmelder: Voith Patent GmbH, 89522 Heidenheim (DE)
(72) Erfinder: Niemann, Jochen, Dr., 47804 Krefeld (DE); Autrata, Jochen, 47506 Neukirchen-Vluyn (DE)

(57) **Zusammenfassung**

Die Erfindung betrifft eine Walze (1) mit einem um eine Rotationsachse umlaufenden Mantel (2), die wenigstens ein Stützelement (5) aufweist, das auf den Innenumfang des Mantels eine Kraft ausüben kann, wobei sich das Stützelement (5) auf einer nicht rotierenden, den Mantel durchsetzenden Achse (4) abstützt. Um die Herstellbarkeit der Achse zu vereinfachen, besteht die Hauptkomponente der Achse aus einem gegossenen oder geschäumten Verbundwerkstoff und die Achse ist zwischen zwei Endstücken (13a,13b) aus einem steiferen Material als dem Verbundwerkstoff angeordnet.

## Beschreibung

Die Erfindung betrifft eine Walze mit einem um eine Rotationsachse umlaufenden Mantel, die wenigstens ein Stützelement aufweist, das auf den Innenumfang des Mantels eine Kraft ausüben kann, wobei sich das Stützelement auf einer nicht rotierenden, den Mantel durchsetzenden Achse abstützt.

Eine derartige Walze ist in vielen Variationen bekannt. Im Bereich der Papier herstellenden und verarbeitenden Industrie, auf die Bezug genommen werden soll, werden derartige Walzen auch als Durchbiegungsausgleichswalzen oder einfach als Biegeeinstellwalzen bezeichnet.

In der Regel wird der Mantel gegen ein Gegendruckelement gedrückt, das beispielsweise ebenfalls eine Walze sein kann. Zwischen den beiden bildet sich ein Nip (eine Pressfläche) aus, in der eine laufende Papier- oder Kartonbahn unter Druck behandelt werden kann.

Der um eine feststehende Achse rotierende Mantel wird bei derartigen Walzen aus den unterschiedlichsten Materialien hergestellt. Neben dem relativ steifen Mantel aus Stahl oder faserverstärkten Kunststoffen mit Wandstärken in der Größenordnung von 20 bis 100 mm, sind auch relativ weiche, flexible Mäntel geläufig, die wie ein geschlossenes Band um die Achse umlaufen und deren fiktive Rotationsachse nicht mit der feststehenden Achse identisch sein muss. Auch die Anzahl und die Form des Stützelementes bzw. mehrerer Stützelemente kann sich stark unterscheiden. So kann die Anlagefläche, die gegen den Innenumfang des Mantels wirkt, beispielsweise konkav oder konvex geformt sein. Die Stützelemente können mit hydrostatischen Taschen ausgerüstet sein, um einen gleichmäßigen Schmierfilm zwischen sich und dem Mantel aufzubauen, odeaber (und das ist insbesondere bei Presswalzen der Fall, bei denen es nur einen einzigen sogenannten Stützschuh gibt) lediglich mit hydrodynamischer Wirkung versehen sein.

Die Achse einer Biegeeinstellwalze wird heute üblicherweise als Schmiedekörper ausgeführt, um die auf die Walze wirkenden Kräfte aufzunehmen und an die Stuhlung abzuleiten, in der die Walze gelagert ist. Das Schmieden der Achsen aus Stahl ist aufwändig und die folgende Nachbearbeitung der Schmiedekörper zum Einbringen der erforderlichen Hydraulikversorgung für die Stützquellen ist mit erheblichen Kosten verbunden.

In der DE 60 2005 003 460 T2 wird ein alternativer Achsenaufbau vorgestellt. In erster Linie um Schwingungsproblemen zu begegnen, aber im Sinne dieser Erfindung auch einsetzbar, um die aufwändige Bearbeitung von Schmiedeachsen zu umgehen, besteht die Achse zumindest zu einem Teil aus einem faserverstärkten Verbundmaterial. Damit handelt man sich aber ein anderes Problem ein, das darin begründet ist, dass die Herstellung einer Achse aus einem faserverstärkten Verbundmaterial sehr arbeitsintensiv und kostspielig ist. Der Achskörper muss nämlich aus Fasern gewickelt werden, die vorher oder nachher oder während des Wickelns mit einem Matrixmaterial getränkt werden. Ein alternativer Aufbau, in dem der Achskörper in vielen Lagen fertiger und mit Matrixmaterial versehener Fasermatten geklebt wird, ist mindestens genau so aufwändig.

Die Erfindung setzt sich deshalb zum Ziel, eine Biegeeinstellwalze mit einem Achskörper zu schaffen, der einfacher in seiner Herstellbarkeit ist. Die Aufgabe wird dadurch gelöst, dass die Hauptkomponente der Achse aus einem gegossenen oder geschäumten Verbundwerkstoff besteht und die Achse zwischen zwei Endstücken aus einem steiferen Material als dem Verbundwerkstoff angeordnet ist.

Ein gegossener oder geschäumter Körper aus Verbundwerkstoff ist in einem einzigen Arbeitsgang herstellbar. Wenn er in einer geeigneten Form oder Kokille aushärtet, ist er sofort zwischen die beiden Endstücke einbindbar. Eine auf diese Weise erzeugte Achse ist sehr kostengünstig und schnell fertig zu stellen. Die Bearbeitung von Achskörpern aus Rundstahl oder Formteilen aus faserverstärkten Verbundmaterial entfällt. Dabei ist es bevorzugt, wenn das Material gemäß der Erfindung aus einem Verbundwerkstoff ist, der eine ähnliche Wärmeausdehnung wie Stahl hat und dessen E-Modul deutlich kleiner als Stahl ist (ca. 5000 bis 110000N/mm²).

Es ist günstig, wenn die Endstücke zugleich die lagerbaren Zapfen umfassen. Auf diese Weise erspart man sich eine weitere Verlängerung der Achse und die festigkeitsbetrachtet komplizierte Anbindung von separaten lagerbaren Zapfen an die Endstücke.

Es ist von Vorteil, wenn bei der Herstellung der Achse der Verbundwerkstoff zwischen den Endstücken eingegossen oder eingeschäumt ist. Auf diese Weise ist eine exakte Passgenauigkeit und Fluchtung zwischen der Achse und den Endstücken vorgegeben. An den Endstücken können Anker vorgesehen werden, die eine schubkraftfreie Verbindung zwischen dem jeweiligen Endstück und der Achse aufbauen, indem sie von dem gegossenen oder geschäumten Verbundwerkstoff umschlossen werden. Mit Vorteil ist dafür gesorgt, dass in dem Verbundwerkstoff wenigstens eine Leitung (ein Versorgungskanal) eingegossen oder eingeschäumt ist. Die Hydraulikleitungen zu dem wenigstens einen Stützelement sind besonders einfach zu realisieren. So können beispielsweise die notwendigen Rohrleitungen geschützt in den Verbundwerkstoff mit eingegossen oder geschäumt werden.

Für einige gieß- oder schäumbare Verbundwerkstoffe ist es vorteilhaft, wenn ein Spannelement zum Einspannen der Hauptkomponente der Achse zwischen den Endstücken vorhanden ist. Setz- und Dehnungsverhalten kann auf diese Weise beeinflusst werden. Außerdem erlaubt die Vorspannung, den Verbundwerkstoff in einen geeigneten Zug- und Druckfestigkeitsbereich für die Walze im Belastungszustand zu bringen.

Dabei ist es günstig, wenn das Spannelement ein Zuganker ist, der durch die Hauptkomponente der Achse verläuft. Die Kräfte können weitestgehend ohne Momenteneinfluss und somit Schubspannungen in den Verbundwerkstoff eingebracht werden. In einer einfachen Ausgestaltung sind eine oder mehrere Zuganker in Form von Gewindestangen in den Verbundwerkstoff mit Spiel mit eingegossen oder eingeschäumt und reichen durch die Endstücke, die von außen über Muttern gegen den Verbundwerkstoff vorgespannt werden können.

Vorzugsweise ist die Hauptkomponente aus einem Beton gebildet. Mit dem Gießen von Beton liegen große Erfahrungen vor und der Werkstoff ist geeignet hohe Druck- und bis zu einem gewissen Maß auch Zugspannungen aufzunehmen. Sie besteht vorteilhafterweise aus selbstverdichtendem Beton, ggf. auch aus selbstverdichtendem Stahlbeton mit Druckfestigkeiten bis 250 N/mm² und Zugfestigkeiten bis 25 N/mm². Handelsüblicher Beton stellt ein Dreistoff-System (Zement, Wasser, Zuschlag = Quarz, Sand, Kies) dar. Im Gegensatz hierzu stellt der selbstverdichtende Beton ein Fünfstoff-System aus Zement, Wasser, Zuschlag, Feinstaub wie Mikrosilika und Flugasche sowie aus speziellen Fließmitteln und chemischen Stabilisierern dar. Der selbstverdichtende (Stahl-)Beton kann unter erhöhtem Einsatz von Mehlkorn oder Einsatz eines chemischen Stabilisierers oder aber als Kombination von erhöhtem Mehlkornanteil sowie Stabilisierern hergestellt werden.

Unter Verwendung von Stahlbeton ist es vorteilhaft, Bewehrungen in diese Hauptkomponente mit einzugießen. Eine Achse mit einer Hauptkomponente aus Beton wird auf die Weise besser geeignet sein, um den hohen Spannungen einer Biegeeinstellwalze gewachsen zu sein. In den Beton werden eine oder mehrere Bewehrungswendeln aus Stahl eingelegt, so dass eine Rissbildung im Beton unterbunden bzw. beschränkt wird. Die Längsbewehrung nimmt dabei die Zug- und Biegebeanspruchungen im Verbundwerkstoff auf, während die Schubkräfte über die Querbewehrung begrenzt werden.

Besonders bevorzugt ist zumindest auf der einem Gegendruckelement nächstliegenden Seite der Achse ein in axialer Richtung verlaufender, mit den Endstücken in Verbindung stehender Obergurt vorgesehen. Da Verbundwerkstoffe oftmals auf Biegebelastungen empfindlich reagieren, können diese als Zug- oder Druckspannungen in dem Obergurt abgefangen werden. Auch hier werden Verbindungselemente vorgesehen (Anker, Bolzen, Dübel)

In einigen Fällen erweist es sich dann als vorteilhaft, wenn neben dem Obergurt auch auf der dem Gegendruckelement angewandten Seite der Achse ein in axialer Richtung verlaufender, mit den Endstücken in Verbindung stehender Untergurt vorgesehen ist. Die Gurte sollten dabei in direkter Verbindung mit den Endstücken bzw. lagerbaren Zapfen stehen. Auch im Übergangsbereich der Gurte zu dem Verbundwerkstoff werden Verbindungselemente vorgesehen (Anker, Bolzen, Dübel), die für einen schubsteifen Verbund sorgen. Damit kann der gesamte aus Stahl und Kompositwerkstoff bestehende Komplex als Verbundträger bzw. als Verbundachse genutzt werden.

Die Achse wird so dimensioniert, dass von den in die Achse eingebrachten Belastungen die Druckbeanspruchungen durch den Obergurt und die Hauptkomponente der Achse, also den Verbundwerkstoff, aufgenommen werden. Der andere Teil der Belastungen (Zugbeanspruchungen) werden überwiegend durch den Untergurt aufgenommen. Der Untergurt wird dann so dimensioniert, dass der Verbundwerkstoff nur in geringem Maße auf Zug beansprucht wird. Endstücke, Obergurt und Untergurt können in Verbindung die Form bilden, in der der Verbundwerkstoff ausschäumt oder in die er gegossen wird. Wenn der Verbundwerkstoff dort ausgehärtet ist, ist die gesamte Walzenachse fertig gestellt und muss nicht mehr nachbearbeitet werden. Der Obergurt und/oder die Zapfen und/oder der Untergurt bestehen vorzugsweise aus einem metallischen Werkstoff, insbesondere Stahl.

Ganz besonders vorteilhaft ist es, wenn in dem Ober- und/oder Untergurt wenigstens eine Bohrung vorhanden ist, die als Zylinderraum für einen hydraulischen, vorzugsweise hydrostatischen Stützelement-Kolben des Stützelementes dient. Die Gurte können, wenn sie beispielsweise aus Stahl hergestellt sind, auf diese Weise eine zusätzliche Funktion übernehmen. Die hydraulischen Komponenten eines Stützelementes müssen hinsichtlich der Toleranzen ausgesprochen präzise gefertigt werden. Hier ist ein Stahl besser geeignet als die Hauptkomponente in Form eines Verbundwerkstoffes. Die Gurte übernehmen also nicht nur die Funktion, Biegespannungen auf den Verbundwerkstoff abzuwenden, sondern bilden gleichzeitig nach entsprechender Bearbeitung die Zylinderräume für die hydraulischen Stützelement-Kolben.

Um eine besonders präzise Durchbiegungseinstellbarkeit über die axiale Länge der Walze realisieren zu können, ist es bevorzugt, dass mindestens 5 Stützelemente pro Meter Walzenlänge in Richtung des Gegendruckelementes wirkend angeordnet sind. Bei Papierbahnen, die heutzutage eine Breite von bis zu 11 Metern haben, ist es für die Aufwicklung der Bahn zu Tambouren und auch für die Weiterverarbeitung in Druckereien unerlässlich, dass das Dickenquerprofil der Bahn über die Breite nur um wenige Mikrometer variiert. Mit der genannten Anzahl Stützelemente pro Meter Arbeitsbreite hat man gute Erfahrungen gemacht, diese Verhältnisse einhalten zu können.

Durch die Eingießbarkeit der Hydraulikleitungen in den Verbundwerkstoff wird es leicht möglich, mehrere Stützelemente oder zumindest Stützelementgruppen unabhängig voneinander mit unterschiedlichen Öldrücken zu beaufschlagen.

Ein zusätzlicher, aber nicht zu vernachlässigender Vorteil ergibt sich bei einer gegossenen oder geschäumten Hauptkomponente einer Achse dadurch, dass in den Verbundwerkstoff ein Schwingungstilger integriert werden kann. Resonanzfrequenzen von Achsen lassen sich in der Regel bereits vor der Herstellung leicht berechnen, so dass man Tilger mit entsprechender Tilgerfrequenz als festen Bestandteil in der Achse vorsehen kann.

Die Erfindung wird im Folgenden anhand von Ausführungsbeispielen unter Bezugnahme auf die Zeichnung(en) näher erläutert. In dieser zeigt
Figur 1 einen schematischen Längsschnitt durch die erfindungsgemäße Walze und
Figur 2 einen schematischen Querschnitt durch die Achse einer erfindungsgemäßen Walze

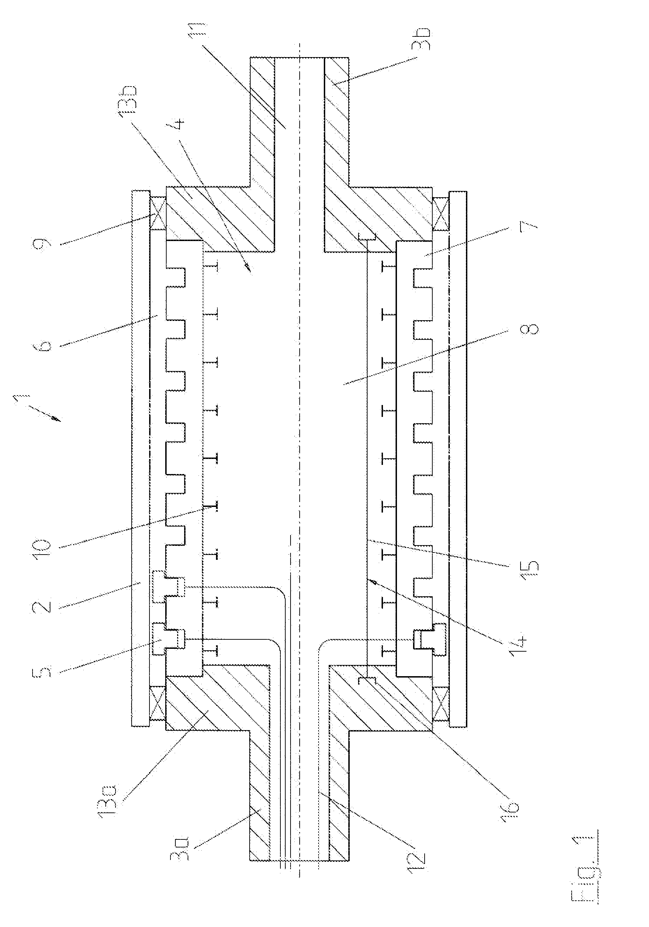

In der Fig. 1 ist die erfindungsgemäße Walze 1 dargestellt. Sie besitzt einen umlaufenden Mantel 2, der an jedem axialen Ende mittels Lagern 9 auf jeweils einem Zapfen 3a, 3b gelagert. Die Lagerung ist so gestaltet, dass der Mantel 2 radial zur Achse 4 zumindest in Richtung eines nicht dargestellten Gegendruckelementes beweglich ist. Für diese Bewegung und den Anpressdruck auf das Gegendruckelement sorgen Stützelemente 5, die sich hydraulisch auf der Achse 4 abstützen.

Die Achse ist in dem Ausführungsbeispiel dreischichtig aufgebaut. Als äußere Schichten sind ein Obergurt 6 und ein Untergurt 7 vorgesehen, die mit Endstücken 13a, 13b, die in diesem Ausführungsbeispiel eine Einheit mit den Zapfen 3a, 3b bilden, verbunden, beispielsweise verschweißt sind. Idealerweise ist sowohl der Werkstoff der Zapfen als auch der der Gurte Stahl. Erfindungsgemäß besteht die Hauptkomponente 8 der Achse 4 jedoch aus einem gieß- oder schäumbaren Verbundwerkstoff. Der bevorzugte gießbare Verbundwerkstoff ist ein Beton, der bevorzugte schäumbare Verbundwerkstoff ist ein Metallschaum. Über Anker 10, die fest mit den Gurten verbunden sind, und von dem Verbundwerkstoff bei der Herstellung der Achse 4 eingeschlossen werden, sind die drei Schichten schubkraftfrei miteinander vereinigt. In dem Ausführungsbeispiel nach Fig. 1 sind die Zapfen jeweils mit einer Hohlbohrung 11 versehen, die ebenfalls von dem Verbundwerkstoff ausgefüllt ist. Das hat den Vorteil, dass der Verbundwerkstoff bei der Herstellung der Walze bequem durch die Hohlbohrung der Zapfen in den Raum zwischen den Gurten 6, 7 und der Endstücke 13a, 13b eingebracht werden kann. Gleichzeitig können Leitungen 12 mit eingegossen werden, die der hydraulischen DruckmittelVersorgung der Stützelemente 5 dienen. Aufwändige axiale Längsbohrungen in der Achse 4 der Biegeeinstellwalze 1 können somit vermieden werden.

Die Hauptkomponente der Achse, der Verbundwerkstoff, der in diesem Ausführungsbeispiel aus Beton gebildet ist, wird über ein Spannelement 14 vorgespannt. Dazu wird eine Gewindestange 15 mit radialem Abstand in den Betonteil, also die Hauptkomponente 8 der Achse 4 mit eingegossen und an den Endstücken 13a, 13b über Muttern 16 auf Zug belastet. Die Hauptkomponente 8 wird dadurch unter Druck gesetzt, so dass sie ggf. auch leichte Zugspannungen, die aus der Belastung der Walze 1 mit dem Gegendruckelement herrühren, aufnehmen kann.

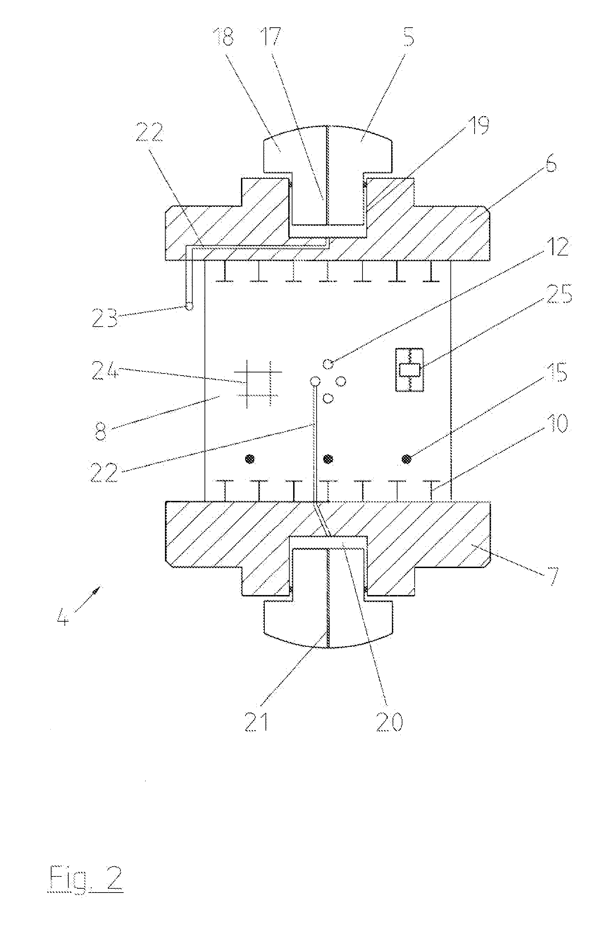

Figur 2 zeigt einen Querschnitt durch die erfindungsgemäße Achse 4. Aus ihr geht hervor, dass die Stützelemente 5 aus einem Kolbenteil 17 mit einem Stützschuh 18 und einem Zylinderraum 19 im Obergurt 6 oder Untergurt 7 bestehen. Der Druckraum 20 wird über eine Zuleitung 22 mit einem Druckmittel versorgt, wobei die Zuleitung 22 in Verbindung mit einer in der Hauptkomponente 8 eingegossenen Leitung 12 steht. Wie bei Stützelementen üblich, kann ein Teil des Druckmittels durch eine Kapillarbohrung 21 zwischen den Innenumfang des Mantels und den Stützschuh 18 gefördert werden, um dort als Schmiermittel zu fungieren. Alternativ zu den eingegossenen Leitungen 12 kann die Druckmittelversorgen auch über eine Außenleitung 23 erfolgen, die ab geeigneter Stelle außen an der Achse angebracht ist. Außerdem ist mit Positionsnummer 24 angedeutet, dass in den Beton auch Bewehrungen mit eingegossen werden können.
Besonders vorteilhaft ist die Möglichkeit, auch einen Schwingungstilger 25 in den Beton einzugießen oder zumindest in einer Aussparung einzubauen. Das gedämpfte Feder-Masse-System des Tilgers ist dabei auf eine Resonanzfrequenz der Walze oder der Achse abgestimmt, um entstehende Vibrationen im Betrieb zu vermeiden oder zumindest zu vermindern.

### Bezugszeichenliste

- 1: Biegeeinstellwalze
- 2: Mantel
- 3a, 3b: Zapfen
- 4: Achse
- 5: Stützelement
- 6: Obergurt
- 7: Untergurt
- 8: Hauptkomponente (der Achse)
- 9: Lager
- 10: Verbindungselement
- 11: Hohlbohrung
- 12: Leitung
- 13a, 13b: Endstück
- 14: Spannelement
- 15: Zuganker (Gewindestange)
- 16: Mutter
- 17: Stützelement-Kolben
- 18: Stützschuh
- 19: Zylinderraum
- 20: Druckraum
- 21: Kapillarbohrung
- 22: Zuleitung
- 23: Außenleitung
- 24: Bewehrung
- 25: Tilger

## Patentansprüche

1. Walze mit einem um eine Rotationsachse umlaufenden Mantel (2), die wenigstens ein Stützelement (5) aufweist, das auf den Innenumfang des Mantels (2) eine Kraft ausüben kann, wobei sich das Stützelement (5) auf einer nicht rotierenden, den Mantel (2) durchsetzenden Achse (4) abstützt, **dadurch gekennzeichnet, dass** die Hauptkomponente (8) der Achse (4) aus einem gegossenen oder geschäumten Verbundwerkstoff besteht und die Achse (4) zwischen zwei Endstücken (13a, 13b) aus einem steiferen Material als dem Verbundwerkstoff angeordnet ist.

2. Walze gemäß Anspruch 1, **dadurch gekennzeichnet, dass** die Endstücke (13a, 13b) lagerbare Zapfen (3a, 3b) umfassen.

3. Walze gemäß Anspruch 1 oder 2, **dadurch gekennzeichnet, dass** bei der Herstellung der Achse (4) der Verbundwerkstoff zwischen den Endstücken (13a, 13b) eingegossen oder eingeschäumt ist.

4. Walze gemäß einem der Ansprüche 1 bis 3, **dadurch gekennzeichnet, dass** in dem Verbundwerkstoff wenigstens eine Leitung (12) eingegossen oder eingeschäumt ist.

5. Walze gemäß einem der Ansprüche 1 bis 4, **dadurch gekennzeichnet, dass** ein Spannelement (14) zum Einspannen der Hauptkomponente (8) der Achse (4) zwischen den Endstücken (13a, 13b) vorhanden ist.

6. Walze gemäß Anspruch 5, **dadurch gekennzeichnet, dass** das Spannelement ein Zuganker (15) ist, der durch die Hauptkomponente (8) der Achse (4) verläuft.

7. Walze gemäß einem der Ansprüche 1 bis 6, **dadurch gekennzeichnet, dass** die Hauptkomponente (8) aus einem Beton gebildet ist.

8. Walze gemäß Anspruch 6 oder 7, **dadurch gekennzeichnet, dass** in der Hauptkomponente (8) Bewehrungen vorgesehen sind.

9. Walze gemäß einem der Ansprüche 1 bis 8, **dadurch gekennzeichnet, dass** zumindest auf der einem Gegendruckelement nächstliegenden Seite der Achse (4) ein in axialer Richtung verlaufender, mit den Endstücken (13a, 13b) in Verbindung stehender Obergurt (6) vorgesehen ist.

10. Walze gemäß Anspruch 9, **dadurch gekennzeichnet, dass** auch auf der dem Gegendruckelement angewandten Seite der Achse (4) ein in axialer Richtung verlaufender, mit den Endstücken (13a, 13b) in Verbindung stehender Untergurt (7) vorgesehen ist.

11. Walze gemäß Anspruch 9 oder 10, **dadurch gekennzeichnet, dass** in dem Ober- und/oder Untergurt (6, 7) wenigstens eine Bohrung vorhanden ist, die als Zylinderraum (19) für einen hydraulischen, vorzugsweise hydrostatischen Stützelement-Kolben (17) des Stützelementes (5) dient.

12. Walze gemäß einem der Ansprüche 1 bis 11, **dadurch gekennzeichnet, dass** mindestens 5 Stützelemente (5) pro Meter Walzenlänge in Richtung des Gegendruckelementes wirkend angeordnet sind.

13. Walze nach Anspruch 12, **dadurch gekennzeichnet, dass** die Stützelemente (5) zumindest in Gruppen unabhängig voneinander mit Druck beaufschlagbar sind.

14. Walze nach Anspruch 9 bis 13, **dadurch gekennzeichnet, dass** der Ober- und/oder der Untergurt (6, 7) über schubsteife Verbindungselemente (10) mit dem Verbundwerkstoff verbunden ist.

15. Walze gemäß einem der Ansprüche 1 bis 14, **dadurch gekennzeichnet, dass** in den Verbundwerkstoff ein Schwingungstilger (25) eingegossen oder eingeschäumt ist.
